# EUROPÄISCHE PATENTSCHRIFT

(11) **EP 0 363 644 B1**
(45) Veröffentlichungstag und Bekanntmachung des Hinweises auf die Patenterteilung: **24.02.1993**
(21) Anmeldenummer: 89116500.3
(22) Anmeldetag: 07.09.1989
(51) Int. Cl.: F16K 17/38

(54) **Gasanschlussarmatur**
Gas supply fitting
Armature de raccordement de gaz

(30) Priorität: 11.10.1988 DE 8812745 U
(43) Veröffentlichungstag der Anmeldung: 18.04.1990
(73) Patentinhaber: Streif, Hans, CH-6983 Magliaso/Lugano (CH)
(72) Erfinder: Müllers, Josef, D-4054 Nettetal 2 (DE)
(74) Vertreter: Stenger, Watzke & Ring Patentanwälte

(56) Entgegenhaltungen:
- DE-A- 3 127 545
- DE-U- 8 622 317
- US-A- 2 638 106

## Beschreibung

Die Erfindung betrifft eine Gasanschlußarmatur für Gasschläuche mit einem Stecker zur Sicherung einer Gasleitung in Brandfall, mit einem Gehäuse, in dem ein gegen eine Feder vorgespannter Ventilkörper angeordnet ist, der einen Haltebolzen aufweist, wobei der Haltebolzen mit einem längsverschieblich in einer quer zur Haltebolzenachse verlaufenden Gehäusebohrung eingesetzten und einerseits über eine Druckfeder im Gehäuse abgestützten Sperrbolzen zusammenwirkt, welcher andererseits von einem axialbeweglichen Bolzen einer Dehnstoffpatrone beaufschlagt ist.

Gasanschlußarmaturen für Gasschläuche sind in der DIN 3383 genormt. Die Gasanschlußarmatur ist zwar mit einem Ventilmechanismus versehen, der beim Abziehen des am Gasschlauch befestigten Stekkers schließt, wenn aber im Brandfall der Gasschlauch beschädigt wird, kann das Gas frei ausströmen.

Aus dem gattungsgemäßen DE-U 86 22 317 ist eine Absperrarmatur für insbesondere Gasleitungen mit einem Armeturengehäuse bekannt, welches als in eine Gasleitung einsetzbarer Rohrabschnitt ausgebildet ist und einen Gaseintritt sowie einen Austritt aufweist. Zwischen Gaseintritt und Gasaustritt ist ein Ventilsitz mit einen gegen den Ventilsitz geführten und in axialer Richtung des Rohrabschnittes bewegbaren Ventilschließkörper angeordnet, wobei der Ventilschließkörper mittels zumindest einer Druckfeder beaufschlagt und mittels einer Verriegelungseinrichtung gegen die Wirkung der Druckfeder in Offenstellung gehalten ist. Die Verriegelungseinrichtung weist einen aus einem Dehnstoffelement ausfahrbaren Bolzen auf, der nach Überschreiten einer Temperatur vorgegebener Höhe in die Entriegelungsstellung überführbar ist. Das Dehnstoffelement ist seitlich auf dar Außenseite des Armaturengehäuses angeordnet, wobei die Druckfeder zwischen einer Schulter im Armaturengehäuse und einem in Verriegelungsstellung befindlichen Verriegelungsring eingespannt ist und der in dem Armaturengehäuse geführte Verriegelungsring an den Ventilschließkörper angeschlossen ist. In Verriegelungsstellung ist der Verriegelungsring mittels eines durch die Gehäusewand des Armaturengehäuses nach außen zurückdrückbaren Verriegalungselementes blockiert, wobei das Verriegelungselement in Blockagastellung mittels eines auf der Außenseite des Armaturengehäuses geführten Sperrgliedes gesperrt ist. Nach Auslösen der Absperrarmatur ist des Sperrglied mittels des Bolzens des Dehnstoffelementes in Freigabestellung zurückdrückbar.

Beim Auslösen der Absperrarmatur dehnt sich also das Dehnstoffelement aus, wodurch der Bolzen des Dehnstoffelementes in Freigabestellung zurückgedrückt wird. Hierdurch kann das als Kugel ausgebildete Verriegelungselement in eine Ausnehmung des Sperrgliedes einrücken, wodurch der einen an dar Kugel vorbeigleitenden Außenkonus aufweisende Verriegelungsring in Axialrichtung des Armaturengehäuses verschiebbar ist und die vorgespannte Druckfeder den Ventilschließkörper in den Ventilsitz drückt.

Aus dem DE-U 86 22 308 ist eine Gasanschlußarmatur mit einem temperaturabhängigen Betätigungsmechanismus bekannt, der mittels einer Haltevorrichtung in Offenstellung und mittels eines auf eine hohe Temperatur ansprechenden Bimetalls mit einem davon beaufschlagten Bolzen in Schließstellung überführbar ist.

Aus der DE-C 33 44 704 ist eine Gasanschlußarmatur für Gasleitungen bekannt, deren Ventilkörper mittels einer manuellen Betätigungsvorrichtung in Schließstellung überführbar sowie unabhängig davon mittels einer auf Temperaturerhöhung ansprechenden Vorrichtung in Schließstellung beweglich ist, wobei diese Vorrichtung aus einer dem Ventilkörper zugeordne ten Dehnstoffpatrone mit einem axial beweglichen, koaxial auf den Ventilkörper arbeitenden Bolzen versehen ist.

Schließlich ist aus dem DE-GM 87 09 338 eine Sicherheitsabsperrarmatur für eine Gasleitung bekannt, bei der ein Ventilkörper mit einer Feder gegen Metallhülsen vorgespannt ist, die unter einem annähernd halben rechten Winkel zur Ventilkörperachse am Mantel des Ventilkörpers anliegen. Die Metallhülsen sind an Schmelzkörpern abgestützt, die im Brandfall schmelzen, so daß die Metallhülsen ausweichen können und den Ventilkörper in Schließrichtung freigeben.

Eine Verwendung dieser bekannten Konstruktionen in genormten Gasanschlußarmaturen (Steckdosen) ist ohne tiefgreifende, konstruktive Veränderungen nicht möglich.

Davon ausgehend liegt der Erfindung die **Aufgabe** zugrunde, eine einfach konstruierte Gasanschußarmatur mit thermischer Auslösung eines Ventilkörpers zu schaffen, die eine besonders kompakte Bauweise mit einer installiert etwa konstanten Länganausdehnung aufweist und die auch für nach DIN 3383 genormte Steckdosen verwendbar ist, wobei deren Auslösezeit sehr kurz ist.

Ausgehend von der gattungsgemäßen Gasanschlußarmatur wird eine Gasanschlußarmatur mit den Merkmalen gemäß Anspruch 1 vorgeschlagen.

Eine nach dieser technischen Lehre ausgebildete Gasanschlußarmatur hat den **Vorteil** einer sehr einfachen, kompakten und äußerst wirksamen Konstruktion. Der Ventilkörper wird unter der Einwirkung der Feder direkt in seine Schließstellung bewegt, sobald der Sperrbolzen unter Wärmeeinwirkung von der Dehnstoffpatrone verschoben wird und mit seiner Umfangsnut die Ringnut des Haltebolzens freigibt. Da die den Ventilkörper vorspannende Feder keine Kraft auf den Bolzen der Dehnstoffpatrone ausübt, ist der Toleranzbereich der Auslösetemperatur sehr klein. Außerdem ist die Auslösezeit sehr kurz. Aufgrund ihrer kompakten Bauweise kann eine erfindungsgemäß ausgebildete Gasanschlußarmatur problemlos in einer nach DIN 3383 genormten Steckdose verwendet werden.

Eine besonders kompakte Bauweise wird bei einer praktischen Ausgestaltung erreicht, bei der die Dehnstoffpatrone neben dem Anschlußstück mit parallel zur Gasdurchtrittsbohrung ausgerichteter Bolzenachse angeordnet ist. Dehnstoffpatrone und Anschlußstutzen liegen dann unmittelbar nebeneinander. Dabei ist der Anschlußstutzen in der Regel zur Gasdurchtrittsbohrung senkrecht abgewinkelt, so daß die Gasanschlußarmatur installiert eine etwa konstante Längsausdehnung aufweist.

Bei einer praktischen Ausführungsform ist vorgesehen, daß der Ventilkörper topfartig ausgebildet ist, daß die an dem Gehäuse abgestützte Feder in den Ventilkörper eingesetzt ist und daß der die Feder führende Haltebolzen in den Ventilkörperboden eingeschraubt ist. Hierdurch wird eine platzsparende Bauweise und eine gleichmäßige Federbeaufschlagung des Ventilkörpers erzielt.

Die Auslösevorrichtung kann mit dem Ventilkörper selbstständig vormontiert und nach einem Auslösevorgang auf einfache Weise wieder in Betriebsbereitschaft versetzt werden, wenn Sperrbolzen, Druckfeder, Bolzen und Dehnstoffpatrone in einen mit dem Gehäuse verschraubbaren Gehäusedeckel eingesetzt sind, dessen Schraubstutzen von dem Haltebolzen durchgriffen wird.

Auch die Dehnstoffpatrone ist einfach einschraub- bzw. austauschbar, wenn sie mit einem Schraubansatz in das Gehäuse eingeschraubt ist. Statt dessen kann die Dehnstoffpatrone aber auch unter Zwischenlage von Dichtungen mit einer Klemmschraube am Gehäuse befestigt sein.

Für den Einsatz unter rauhen Bedingungen kann die Dehnstoffpatrone mit einer am Gehäuse befestigten Schutzkappe umgeben sein. Die Auslösezeit der Gasanschlußarmatur wird verringert, wenn die Schutzkappe Belüftungsschlitze aufweist. Die Auslöseverzögerung kann aber auch durch auf den Mantel der Dehnstoffpatrone angeordnete Wärmeleitsterne herabgesetzt werden.

Weitere Einzelheiten und Vorteile ergeben sich aus der nachfolgenden Beschreibung der zugehörigen Zeichnungen, in denen eine erfindungsgemäße Gasanschlußarmatur schematisch dargestellt worden ist. In den Zeichnungen zeigen:
- Fig. 1: eine Gasanschlußarmatur mit Auslösevorrichtung für den Ventilkörper in einem Gehäusedeckel teilweise längsgeschnitten in Seitenansicht;
- Fig. 2: dieselbe Gasanschlußarmatur entlang der Linie II-III in Fig. 2 geschnitten in Draufsicht;
- Fig. 3: dieselbe Gasanschlußarmatur in Seitenansicht;
- Fig. 4: dieselbe Gasanschlußarmatur in der Draufsicht.

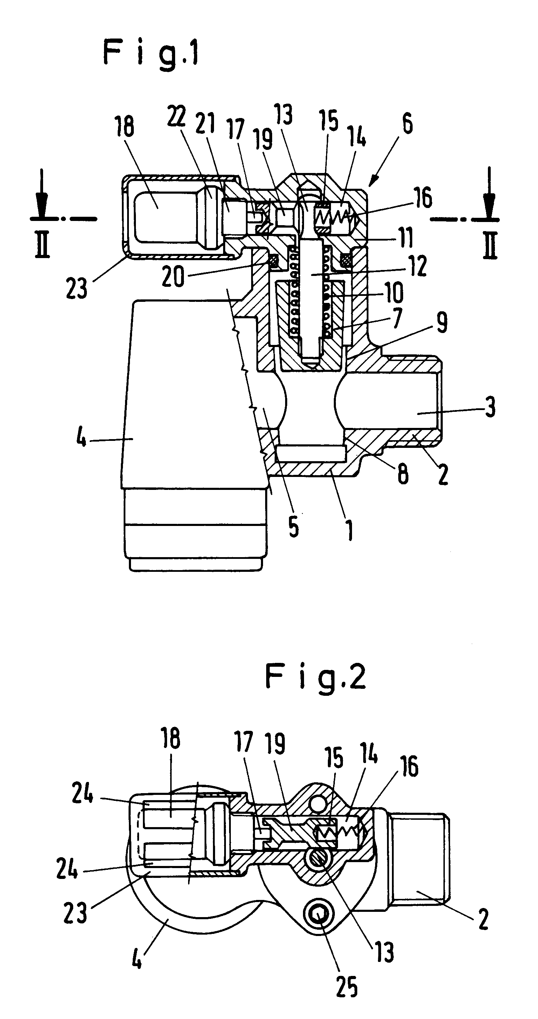

In einem Gehäuse 1 mit einem Anschlußstutzen 2 für einen Gaseintritt 3 ist auf einer Seite einer als Steckdose ausgebildetes Anschlußstück 4 für die Verbindung mit einem Stecker am Ende eines - nicht dargestellten Gasschlauches - vorgesehen, der zu einem Verbraucher, beispielsweise einem Gasherd führt. Das Anschlußstück 4 ist zu einer Gasdurchtrittsbohrung 5 der Gasanschlußarmatur senkrecht abgewinkelt, so daß der Stecker in das Anschlußstück 4 gemäß Fig. 1 von unten einzuführen ist. In dem Anschlußstück 4 ist eine - ebenfalls nicht dargestellte und auch nicht beschriebene - Ventileinrichtung angeordnet, die mit dem Einführen des Steckers geöffnet und mit dem Abziehen des Steckers wieder geschlossen wird.

Zwischen dem Anschlußstutzen 2 und dem Anschlußstück 4 ist im Gehäuse 1 ein zusätzliches Brandschutzventil 6 angeordnet, dessen Ventilkörper 7 in die Gasdurchtrittsbohrung 5 eingerückt und gegen einen konischen Dichtsitz 8,9 gepreßt werden kann. Hierzu ist eine Feder 10 vorgesehen, die sich über einen eingeschraubten Gehäusedeckel 11 an dem Gehäuse 1 abstützt.

Der Ventilkörper ist jedoch von einem in den Ventilkörperboden eingeschraubten und in dem Gehäusedeckel gehaltenen Haltebolzen 12 an einem Schließen unter der Vorspannung der Feder 10 gehindert. Der Haltebolzen ragt hierzu mit einer Ringnut 13 in eine Gehäusebohrung 14 des Gehäusedeckels 11 hinein, und wird dort von einem in die Ringnut 13 eingreifenden Sperrbolzen 15 gehalten. Der Sperrbolzen 15 wiederum ist in dieser Ausgangslage einerseits über eine Druckfeder 16 und andererseits über einen Bolzen 17 einer im Gehäusedeckel 11 verschraubten Dehnstoffpatrone 18 gesichert. Wie aus der Fig. 1 und besser aus der Fig. 2 ersichtlich ist, kann die Dehnstoffpatrone 18 den Bolzen 17 mit dem Sperrbolzen 15 beim Überschreiten einer bestimmten Auslösetemperatur in der Gehäusebohrung 14 verschieben, bis eine Umfangsnut 19 des Sperrbolzens 15 die Ringnut 13 des Haltebolzens 12 freigibt. Dann schließt der Ventilkörper 7 unter der Vorspannung der Feder 10 und ein weiterer Gasaustritt wird vermieden. Das Brandschutzventil 6 kann in seine Ausgangsstellung zurückversetzt werden, in dem die Dehnstoffpatrone 18 ausgetauscht, der Gehäusedeckel 11 gelöst und nach dem Einrücken des Ventilkörpers 7 wieder im Gehäuse 1 verschraubt wird.

Zur Vermeidung von Leckagen ist der Anschlußstutzen des Gehäusedeckels 11 mit einem O-Ring 20 gegen das Gehäuse 1 abgedichtet. Die Dehnstoffpatrone 18 ist an einem Schraubstutzen 21 mit dem Gehäusedeckel 11 verschraubt und an einem Bund 22 fixiert, so daß sie keiner besonderen Abdichtung mehr bedarf.

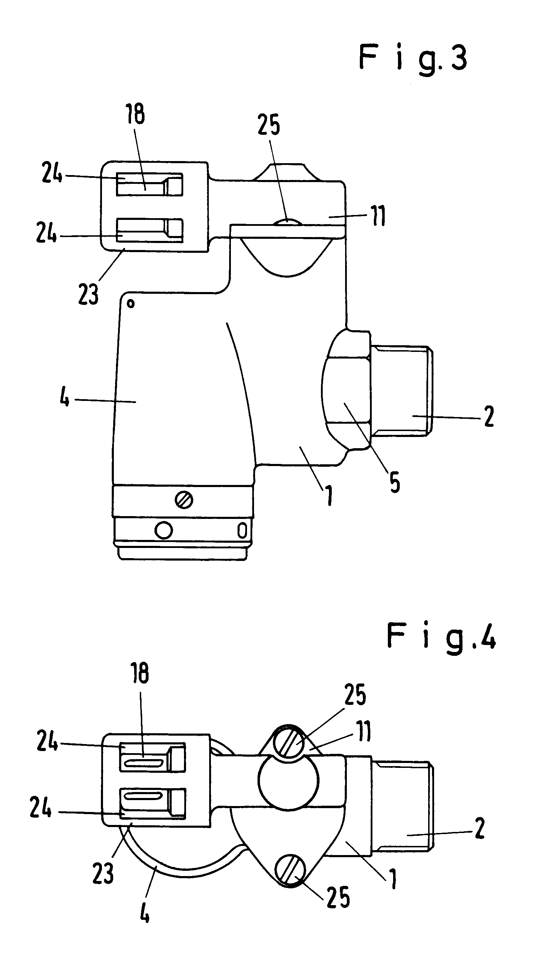

Zur Abdeckung der Dehnstoffpatrone 18 ist eine Schutzkappe 23 vorgesehen. Wie besser den Fig. 3 und 4 entnommen werden kann, hat die Schutzkappe 23 den Wärmeübergang verbessernde und die Auslösezeit des Brandschutzventils 6 verbessernde Belüftungsschlitze 24.

Wie ebenfalls aus den Fig. 3 und 4 ersichtlich ist, ist der Gehäusedeckel 11 mit Schrauben 25 an dem Gehäuse 1 fixiert. Die Schrauben 25 sind so angeordnet, daß die Dehnstoffpatrone 18 und die Schutzkappe 23 neben dem Anschlußstutzen 4 und die Achse des Bolzens 17 parallel zur Gasdurchtrittsöffnung 5 angeordnet sind. Hierdurch wird eine äußerst kompakte Bauweise erzielt, bei der die Längsausdehnung der Gasanschlußarmatur bei eingeschraubtem Anschlußstutzen überall etwa konstant ist.

## Patentansprüche

1. Gasanschlußarmatur für Gasschläuche mit einem Stecker zur Sicherung einer Gasleitung im Brandfall, mit einem Gehäuse (1), in dem ein gegen eine Feder (10) vorgespannter Ventilkörper (7) angeordnet ist, der einen Haltebolzen (12) aufweist, wobei der Haltebolzen (12) mit einem längsverschieblich in einer quer zur Haltbolzenachse verlaufenden Gehäusebohrung (14) eingesetzten und einerseits über eine Druckfeder (16) im Gehäuse (1) abgestützten Sperrbolzen (15) zusammenwirkt, welcher andererseits von einem axialbeweglichen Bolzen (17) einer Dehnstoffpatrone (18) beaufschlagt ist,
**dadurch gekennzeichnet,**
daß der Haltebolzen (12) eine Ringnut (13) aufweist, daß in die Ringnut (13) der Sperrbolzen (15) eingreift, daß der Sperrbolzen (15) so weit verschiebbar ist, bis eine Umfangsnut (19) des Sperrbolzens (15) die Ringnut (13) des Haltebolzens (12) freigibt und
daß der Haltebolzen (12) zwischen einem Anschlußstutzen (2) für Gaseintritt und einem Anschlußstück (4) für einen Gasschlauch senkrecht zu einer Gasdurchtrittsbohrung (5) ausgerichtet ist.

2. Gasanschlußarmatur nach Anspruch 1, dadurch gekennzeichnet, daß die Dehnstoffpatrone (18) neben dem Anschlußstück (4) mit parallel zur Gasdurchtrittsbohrung (5) ausgerichteter Bolzenachse angeordnet ist.

3. Gasanschlußarmatur nach einem der Ansprüche 1 bis 2, dadurch gekennzeichnet, daß der Ventilkörper (7) topfartig ausgebildet ist, daß die an dem Gehäuse (1) abgestützte Feder (10) in den Ventilkörper (7) eingesetzt ist und daß der die Feder (10) führende Haltebolzen (12) in den Ventilkörperboden eingeschraubt ist.

4. Gasanschlußarmatur nach einem der Ansprüche 1 bis 3, dadurch gekennzeichnet, daß Sperrbolzen (15), Druckfeder (16), Bolzen (17) und Dehnstoffpatrone (18) in einen mit dem Gehäuse (1) verschraubbaren Gehäusedeckel (11) eingesetzt sind, dessen Schraubstutzen von dem Haltebolzen (12) durchgriffen wird.

5. Gasanschlußarmatur nach einem der Ansprüche 1 bis 4, dadurch gekennzeichnet, daß die Dehnstoffpatrone (18) mit einem Schraubansatz (21) in das Gehäuse (1) eingeschraubt ist.

6. Gasanschlußarmatur nach einem der Ansprüche 1 bis 5, dadurch gekennzeichnet, daß die Dehnstoffpatrone (18) unter Zwischenlage von Dichtungen mit einer Klemmschraube am Gehäuse (1) befestigt ist.

7. Gasanschlußarmatur nach einem der Ansprüche 1 bis 6, dadurch gekennzeichnet, daß die Dehnstoffpatrone (18) von einer am Gehäuse (1) befestigten Schutzkappe (23) umgeben ist.

8. Gasanschlußarmatur nach einem der Ansprüche 1 bis 7, dadurch gekennzeichnet, daß die Schutzkappe (23) Belüftungsschlitze (24) aufweist.

9. Gasanschlußarmatur nach einem der Ansprüche 1 bis 8, dadurch gekennzeichnet, daß auf dem Mantel der Dehnstoffpatrone (18) Wärmeleitsterne angeordnet sind.

## Claims

1. Gas connection fitting for gas hoses having a plug for securing a gas pipe in the event of fire, having a housing (1) in which there is disposed a valve body (7) which is pre-tensioned against a spring (10) and which exhibits a retaining bolt (12), the retaining bolt (12) interacting with a locking bolt (15), which is inserted displaceably in the longitudinal direction in a housing bore (14) running transversely to the axis of the retaining bolt and is supported in the housing (1) by means of a pressure spring (16) on the one hand and which is acted upon by an axially movable bolt (17) of a stretch-material cartridge (18) on the other hand, characterised in that the retaining bolt (12) exhibits an annular groove (13), in that the locking bolt (15) engages in the annular groove (13), in that the locking bolt (15) can be displaced up to the point at which a peripheral groove (19) of the locking bolt (15) frees the annular groove (13) of the retaining bolt (12) and in that the retaining bolt (12) is aligned perpendicular to a gas passage bore (5) between a connecting socket (2) for gas admission and a connecting piece (4) for a gas hose.

2. Gas connection fitting according to Claim 1, characterised in that the stretch-material cartridge (18) is disposed next to the connecting piece (4) having its bolt axis aligned parallel to the gas passage bore (5).

3. Gas connection fitting according to one of Claims 1 to 2, characterised in that the valve body (7) is of cup-like configuration, in that the spring (10) supported against the housing (1) is inserted into the valve body (7) and in that the retaining bolt (12) guiding the spring (10) is screwed into the base of the valve body.

4. Gas connection fitting according to one of Claims 1 to 3, characterised in that the locking bolt (15), the pressure spring (16), the bolt (17) and the stretch-material cartridge (18) are inserted into a housing cover (11) which can be screwed to the housing (1) and the screw socket of which is reached through by the retaining bolt (12).

5. Gas connection fitting according to one of Claims 1 to 4, characterised in that the stretch-material cartridge (18) is screwed by a screw attachment (21) into the housing (1).

6. Gas connection fitting according to one of Claims 1 to 5, characterised in that the stretch-material cartridge (18) is fastened by a clamping screw to the housing (1), seals being placed in between.

7. Gas connection fitting according to one of Claims 1 to 6, characterised in that the stretch-material cartridge (18) is surrounded by a protective cap (23) fastened to the housing (1).

8. Gas connection fitting according to one of Claims 1 to 7, characterised in that the protective cap (23) exhibits ventilation slots (24).

9. Gas connection fitting according to one of Claims 1 to 8, characterised in that heat-conducting stars are disposed on the casing of the stretch-material cartridge (18).

## Revendications

1. Raccord de branchement de gaz pour tuyaux de gaz comportant un embout emboîtable, le raccord étant destiné à assurer la protection d'une conduite de gaz en cas d'incendie et comportant un carter (1) dans lequel est disposé un corps formant soupape (7) précontraint à l'encontre d'un ressort (10) et présentant une broche de retenue (12), cette broche de retenue (12) coopérant avec une broche de blocage (15) déplaçable longitudinalement dans un alésage (14) du carter, en s'étendant perpendiculairement à l'axe de la broche de retenue, et qui d'un côté s'appuie contre le carter (1) par l'intermédiaire d'un ressort de compression (16), et de l'autre côté est sollicitée par une broche (17) mobile axialement, d'une cartouche à matériau de dilatation (18), caractérisé
en ce que la broche de retenue (12) comporte une rainure annulaire (13), en ce que la broche de blocage (15) s'engage dans la rainure annulaire (13), en ce que la broche de blocage (15) peut coulisser suffisamment pour qu'une rainure périphérique (19) de la broche de blocage (15) libère la rainure annulaire (13) de la broche de retenue (12), et en ce que la broche de retenue (12) est orientée perpendiculairement à un alésage de passage de gaz (5), entre un embout de raccordement (2) pour l'entrée du gaz et une pièce de raccordement (4) pour un tuyau de gaz.

2. Raccord de branchement de gaz selon la revendication 1, caractérisé en ce que la cartouche à matériau de dilatation (18) est disposée à côté de la pièce de raccordement (4), avec son axe de broche qui est orienté parallèlement à l'alésage de passage de gaz (5).

3. Raccord de branchement de gaz selon l'une des revendications 1 à 2, caractérisé en ce que le corps formant soupape (7) présente une configuration en forme de pot, en ce que le ressort (10) s'appuyant sur le carter (1) est inséré dans le corps formant soupape (7), et en ce que la broche de retenue (12) guidant le ressort (10) est vissée dans le fond du corps formant soupape.

4. Raccord de branchement de gaz selon l'une des revendications 1 à 3, caractérisé en ce que la broche de blocage (15), le ressort de compression (16), la broche (17) et la cartouche à matériau de dilatation (18) sont logés dans un couvercle de carter (11) pouvant être vissé sur le carter (1) et dont l'embout à visser est traversé par la broche de retenue (12).

5. Raccord de branchement de gaz selon l'une des revendications 1 à 4, caractérisé en ce que la cartouche à matériau de dilatation (18) est vissée dans le carter (1) au moyen d'une embase à visser (21).

6. Raccord de branchement de gaz selon l'une des revendications 1 à 5, caractérisé en ce que la cartouche à matériau de dilatation (18) est fixée sur le carter (1) au moyen d'une vis de serrage, et avec interposition de joints d'étanchéité.

7. Raccord de branchement de gaz selon l'une des revendications 1 à 6, caractérisé en ce que la cartouche à matériau de dilatation (18) est entourée d'un cabochon de protection (23) fixé sur le carter (1).

8. Raccord de branchement de gaz selon l'une des revendications 1 à 7, caractérisé en ce que le cabochon de protection (23) comporte des fentes d'aération (24).

9. Raccord de branchement de gaz selon l'une des revendications 1 à 8, caractérisé en ce que sur l'enveloppe de la cartouche à matériau de dilatation (18) sont disposées des étoiles de conduction thermique.
